# EUROPÄISCHE PATENTANMELDUNG

(11) **EP 2 952 559 A1**
(43) Veröffentlichungstag der Anmeldung: **09.12.2015**
(21) Anmeldenummer: 15170558.9
(22) Anmeldetag: 03.06.2015
(51) Int. Cl.: C10L 9/08

(54) **VERFAHREN ZUR BEHANDLUNG EINER FEUCHTEN, HEIZWERTARMEN MASSE**

(30) Priorität: 05.06.2014 DE 102014107969
(71) Anmelder: EnBW Energie Baden-Württemberg AG, 76131 Karlsruhe (DE)
(72) Erfinder: WALZ, Leonhard, 76437 Rastatt (DE); BOTT, Jan-Michael, 76131 Karlsruhe (DE); BOCKHORN, Henning, 76327 Pfinztal (DE); STEINBRÜCK, Johannes, 76149 Karlsruhe (DE)
(74) Vertreter: Kaufmann, Ursula Josefine

(57) **Zusammenfassung**

Die Erfindung betrifft ein Verfahren zur Behandlung einer feuchten, heizwertarmen Masse, wobei folgende Schritte ausgeführt werden
(a) Bilden einer Mischung aus der Masse und einem Ausgangsstoff, wobei der Ausgangsstoff einen oder mehrere zellulosereiche und/oder lignozellulosereiche Bestandteile enthält;
(b) Beaufschlagen der Mischung mit einem dampfförmigen Reaktionsmedium in einem Reaktor (100), wobei das Reaktionsmedium Wasser in Form von Wasserdampf enthält;
(c) Umwandeln der Mischung im Reaktor (100) mit dem Reaktionsmedium unter Sauerstoffabreicherung bei einem Druck im Bereich von Atmosphärendruck bis höchstens 5 bar und einer Behandlungstemperatur im Bereich zwischen 100°C und 450°C in ein kohlenstoffangereichertes Feststoffprodukt.

## Beschreibung

Die Erfindung betrifft ein Verfahren zur Behandlung einer feuchten und heizwertarmen Masse.

Als feuchte und heizwertarme Massen sind beispielsweise Trester oder Gärreste bekannt. Gärreste entstehen als stark wasserhaltige Rückstände bei der Vergärung von Biomasse in einer Biogasanlage oder z.B. bei der Ethanolherstellung aus Getreide. Der Heizwert von unbehandelten Trestern oder Gärresten ist gering.

Eine weitere feuchte und heizwertarme Masse ist beispielsweise Klärschlamm. Der bei der Abwasserreinigung entstehende Klärschlamm besteht aus einer Mischung von Feststoffen und Flüssigstoffen. In dem Flüssigstoffanteil können neben Wasser eine Vielzahl von chemischen Verbindungen in gelöstem Zustand vorliegen. Zur Entsorgung kann Klärschlamm aufgrund des hohen Nährstoffgehalts bei hinreichend geringem Schadstoffanteil auf Ackerflächen als Dünger genutzt werden. Eine Entsorgung in Deponien kann wegen des hohen Anteils an organischen Bestandteilen üblicherweise nicht erfolgen. Nicht als Dünger genutzter Klärschlamm wird daher in thermischen Verfahren durch Verbrennung oder Vergasung umgesetzt. Der Heizwert des unbehandelten Klärschlamms ist wegen des hohen Wassergehaltssehr gering. Zur Erreichung eines für eine Verbrennung ausreichenden Heizwerts erfolgt daher zweckmäßig eine vorherige Trocknung des Klärschlamms, die allerdings selbst einen hohen Energiebedarf hat.

Die Verbrennung von Klärschlamm in Kraftwerken erfolgt durch dessen Beimischung zum Brennstoff im Volllastbetrieb des Kraftwerks. Da zunehmend Kraftwerke nicht bei Volllast betrieben werden können, entstehen Probleme bei der Entsorgung von Klärschlamm.

Aus der DE 10 2009 021 165 B3 ist ein Verfahren bekannt, um aus Klärschlamm ein feststoffartiges Düngemittel herzustellen. Klärschlamm wird vorgetrocknet, bis dieser einen Trockensubstanzgehalt von 20% bis 40% aufweist, anschließend mit Zelluloseschlamm und alkalischen Substanzen wie gebranntes Calciumoxid, welche unter hohem Druck von bis zu 50 bar zugeführt werden, gemischt und durch die wasserentziehende Wirkung des Calciumoxids und die Wärmetönung der ausgelösten chemischen Reaktion dehydriert. Nach Abkühlung werden Oligoelemente zugeführt und das Gemisch einer Nachtrocknung unterzogen, wonach eine Pulverisierung, Granulierung oder Pelletierung der getrockneten Masse erfolgt.

Aufgabe der Erfindung ist es, ein Verfahren bereitzustellen, bei dem auch eine als Düngemittel ungeeignete feuchte und heizwertarme Masse veredelt und zu einem kohlenstoffangereicherten Feststoffprodukt umgewandelt werden kann, das problemlos weiterverarbeitet oder entsorgt werden kann.

Eine weitere Aufgabe der Erfindung ist die Schaffung eines Produkts und einer Verwendung für eine mit dem Verfahren behandelte Masse.

Die Aufgaben werden erfindungsgemäß durch die Merkmale der unabhängigen Ansprüche gelöst. Günstige Ausgestaltungen und Vorteile der Erfindung ergeben sich aus den weiteren Ansprüchen, den Zeichnungen und der Beschreibung.

Es wird ein Verfahren vorgeschlagen zur Behandlung einer feuchten, heizwertarmen Masse wobei die Schritte ausgeführt werden (a) Bilden einer Mischung aus der feuchten, heizwertarmen Masse und einem Ausgangsstoff, wobei der Ausgangsstoff eine oder mehrere zellulosereiche und/oder lignozellulosereiche Bestandteile, insbesondere Biomasse, enthält; (b) Beaufschlagen der Mischung mit einem dampfförmigen Reaktionsmedium in einem Reaktor, wobei das Reaktionsmedium Wasser in Form von Wasserdampf enthält; und (c) Umwandeln der Mischung im Reaktor mit dem Reaktionsmedium unter Sauerstoffabreicherung bei einem Druck im Bereich von Atmosphärendruck bis höchstens 5 bar und einer Behandlungstemperatur im Bereich zwischen 100°C und 450°C in ein Feststoffprodukt. Vorteilhaft ist das Feststoffprodukt ein kohlenstoffangereichertes Feststoffprodukt.

Unter feuchter und heizwertarmen Masse soll insbesondere eine Masse verstanden werden, die ganz oder teilweise Klärschlamm und/oder Gärreste und/oder Trester und/oder organischen Abfall tierischer oder pflanzlicher Herkunft aus Haushalten und Betrieben, sogenannter Bioabfall, enthält.

Günstigerweise erlaubt das erfindungsgemäße Verfahren, eine feuchte und heizwertarme Masse zu veredeln und zu einem kohlenstoffangereicherten Feststoffprodukt umzuwandeln, das problemlos weiterverarbeitet oder entsorgt werden kann. Ferner kann die umgewandelte Masse auch energetisch genutzt werden.

Dabei ist der Heizwert des kohlenstoffangereicherten Feststoffprodukts höher als der Heizwert der unbehandelten heizwertarmen Mischung von heizwertarmer Masse und zellulosereichem und/oder lignozellulosereichem Ausgangsstoff.

Der Heizwert des kohlenstoffangereicherten Feststoffprodukts kann sogar erheblich höher sein, als der Heizwert der unbehandelten heizwertarmen Ausgangsprodukte. So kann der Heizwert der unbehandelten Mischung anfangs praktisch verschwindend klein sein und das im Verfahren gebildete Feststoffprodukt einen Heizwert von mehr als 10 MJ/kg betragen.

Anders als beispielsweise bei einer Torrefizierung von Materialien, bei der heiße Abgase eines thermischen Aufbereitungsprozesses zum Trocknen der Materialien dienen, benötigt das erfindungsgemäße Verfahren keine Sauerstoffatmosphäre. Vielmehr dient der Wasserdampf als Vermittler für eine chemische Reaktion, die zur Verkohlung der kohlenstoffhaltigen Bestandteile in der Mischung genutzt wird. Mit besonderem Vorteil wird ein Verfahren verwendet, wie es aus der EP 2 390 301 A2 bekannt ist.

Vorteilhaft erfolgt die Bildung des kohlenstoffangereicherten Feststoffprodukts im Reaktor, bei dem eine Erhöhung des Kohlenstoffgehalts und eine Verminderung des Sauerstoffgehalts des kohlenstoffhaltigen Ausgangsstoffs praktisch drucklos und bei moderaten Temperaturen erfolgen.

Mit besonderem Vorteil kann dies in einem Durchlaufverfahren erfolgen, so dass dem Reaktor die Mischung kontinuierlich zugegeben und das gebildete Feststoffprodukt kontinuierlich entnommen werden kann. Vorteilhaft kann die Verweilzeit der Mischung in dem Reaktor im Wesentlichen durch die Geschwindigkeit einer Fördereinrichtung bestimmt werden, mit der die Mischung durch den Reaktor transportiert wird.

Vorteilhaft kann die Verweildauer der Mischung im Reaktor mittels der Fördereinrichtung so geregelt werden, dass diese einige Minuten bis wenige Stunden beträgt. Während dieser Verweildauer im Reaktor, beispielsweise zwischen 15 bis 120 min, wird die Mischung vorzugsweise durch den Reaktor bewegt. Günstig ist insbesondere ein Temperaturbereich der Behandlung zwischen 250°C und 400°C bei einem bevorzugten Druck zwischen 1 und 4 bar, besonders bevorzugt bei höchstens 2 bar. Dies vereinfacht die Bedienung des Reaktors wie auch die Prozesssteuerung, da keine speziellen Hochdruckeinrichtungen notwendig sind. Aufgrund der atmosphärischen oder wenigstens nahezu atmosphärischen Druckumgebung können Schleusen als Ein- und Auslass des Reaktors erheblich einfacher ausgebildet sein als bei Hochdrucksystemen und benötigen eine weniger anspruchsvolle Steuerung.

Nach einer günstigen Ausgestaltung des Verfahrens kann der Wasserdampf im Reaktionsmedium im Wesentlichen oder vollständig aus der Mischung stammen. Wasser bzw. Wasserdampf kann gesondert extern bereitgestellt werden, es kann jedoch auch darauf verzichtet werden.

Dabei kann mit Vorteil das Reaktionsmedium zumindest teilweise rezirkuliert werden. Die Rezirkulation des Reaktionsmediums kann zu einer Erhöhung des Kohlenstoffgehalts des kohlenstoffangereicherten Feststoffprodukts genutzt werden, da in dem rezirkulierten Reaktionsmedium nicht nur Wasserdampf aus der Mischung, sondern auch organische Bestandteile enthalten sind, die von der Mischung während der Verweilzeit im Reaktor adsorbiert und inkohlt werden können. Dadurch kann der Kohlenstoffanteil des Feststoffprodukts weiter erhöht werden.

Günstigerweise kann die Reaktoranlage eine Temperiereinrichtung umfassen, mit der die gewünschten Behandlungstemperaturen erreichbar sind und diese insbesondere konstant gehalten oder definiert eingestellt werden können. Insbesondere kann z.B. eine Beheizung der Reaktorwand erfolgen. Idealerweise kann die Temperatur durch das Reaktionsmedium, insbesondere Wasserdampf, eingestellt werden, der "dezentral" und als Vorrat bereitet werden kann, so dass im Vergleich zu anderen Verfahren nur geringere Energiemengen zugeführt werden müssen. Bei der Verwendung sehr hoher Klärschlammgehalte in der zu behandelnden Mischung hat es sich als günstig erwiesen, wenn die Fördereinrichtung, etwa eine Förderschnecke, beheizbar ausgebildet ist. Dadurch können Anhaftungen durch sich verfestigenden Klärschlamm an der Fördereinrichtung leicht entfernt werden, indem diese durch Temperatureinwirkung an der Fördereinrichtung zum Ablösengebracht werden.

Nach einer günstigen Weiterbildung kann die Behandlungstemperatur so eingestellt werden, dass die Behandlungstemperatur unterhalb einer Grenztemperatur bleibt, wobei oberhalb der Grenztemperatur eine merkliche, erhöhte Bildung von CO₂ erfolgt. Dies ist ein besonders effizienter Temperaturbereich für die Umwandlung der Mischung in das kohlenstoffhaltige Feststoffprodukt.

Nach einer günstigen Weiterbildung kann der Gehalt an feuchter, heizwertarmer Masse in der Mischung abhängig von einer gewünschten Förderbarkeit der Mischung durch den Reaktor eingestellt werden.

Die Förderbarkeit der Mischung durch den Reaktor wird durch Erhöhung der Feuchte oder des Wassergehalts der Mischung erhöht, so dass der Anteil an feuchter, heizwertarmer Masse, insbesondere der Gehalt an Klärschlamm, quasi als "Schmiermittel" dient und ein Verstopfen des Reaktors durch trockene Ausgangsstoffe vermeidet.

Dies erlaubt die Verwendung sehr trockener Ausgangsstoffe, wie etwa Stroh, die beim praktischen Einsatz z.B. in einem Rohrreaktor mit Förderschnecke als Transportstrecke ein Verstopfen der Transportstrecke bewirken können. Das Einstellen der Förderbarkeit der Mischung ermöglicht eine freiere Auswahl der zu verarbeitenden Ausgangsstoffe. Hierzu können entlang des Reaktors entsprechende Diagnoseeinheiten vorgesehen sein.

Nach einer günstigen Weiterbildung kann der Gehalt und/oder die Art an Ausgangsstoff in der Mischung abhängig von einem gewünschten Heizwert des Feststoffprodukts eingestellt werden. Durch die Kohlenstoffanreicherung in der Mischung kann auch eine feuchte Masse mit geringem Trockensubstanzgehalt von weniger als 20 % (bezogen auf das Gewicht der Masse) und einem Heizwert von nahezu null in ein verwertbares Produkt umgesetzt werden. So kann eine solche Masse unter gleichzeitiger Verwendung lignozellulosereicher und/oder zellulosereicher Biomasse in ein Feststoffprodukt umgesetzt werden. Hierzu können entlang des Reaktors entsprechende Diagnoseeinheiten vorgesehen sein.

Nach einer günstigen Weiterbildung kann als Reaktionsmedium statt Wasserdampf ein Wasserdampfgemisch verwendet werden, wobei das Wasserdampfgemisch ein Wasserdampf/Trägergasgemisch und/oder ein Wasserdampf/Reaktionsstoffgemisch sein kann, wobei der Reaktionsstoff insbesondere eines oder mehrere der Bestandteile enthält: eine oder mehrere organische Komponenten wie Methan, und/oder der Gruppe der höheren Alkane, Alkene, Aromate, deren funktionalisierte Derivate, und/oder Kohlendioxid, und/oder Kohlenmonoxid, und/oder ein oder mehrere Aerosole, insbesondere enthaltend Säureanhydride und/oder insbesondere enthaltend Säuren, und/oder Metallsalz, und/oder Verbrennungsabgas. Zum einen kann der Kohlenstoffgehalt des Feststoffprodukts weiter erhöht werden. Zum anderen können Eigenschaften des Feststoffprodukts hinsichtlich hydrophober oder hydrophiler Eigenschaften eingestellt werden. Für ein Feststoffprodukt, das einige Zeit gelagert werden soll, ist es beispielsweise günstig, wenn dieses während der Lagerzeit wenig Wasser aufnimmt.

Nach einer günstigen Weiterbildung kann der Druck im Reaktor und/oder die Behandlungstemperatur und/oder eine Verweildauer in dem Reaktor in Abhängigkeit von einem oder mehreren Parametern des Feststoffprodukts eingestellt werden. Insbesondere kann der Druck im Reaktor und/oder die Behandlungstemperatur und/oder eine Verweildauer in dem Reaktor eingestellt werden, um gezielt ein Feststoffprodukt mit gewünschten Eigenschaften zu erzeugen. So kann bei längerer Verweildauer der Kohlenstoffgehalt des Feststoffprodukts weiter angehoben werden. Insbesondere kann der Druck im Reaktor und/oder die Behandlungstemperatur und/oder die Verweildauer in dem Reaktor während der Umsetzung der Mischung zum Feststoffprodukt angepasst werden. Nach einer günstigen Weiterbildung kann die Mischung kontinuierlich durch den Reaktor bewegt werden. Dies erlaubt eine besonders günstige Prozessdauer, da eine Mehrzahl von Belade- und Entladevorgängen, für die der Reaktor stillgelegt werden muss, entfallen.

Nach einer günstigen Weiterbildung kann überschüssige Gasphase, z.B. des Reaktionsmediums, aus dem Reaktor ausgekoppelt und in variablem Anteil in den Reaktor zurückgeführt werden. Dies erlaubt eine Anreicherung von kohlenstoffhaltigen Komponenten, die während der Umsetzung aus der Mischung in das Reaktionsmedium übergehen. Die dem kohlenstoffhaltigen Ausgangsstoff entzogenen, wertvollen, gasförmigen oder flüssigen Bestandteile können optional auch gesammelt, anderweitig verwendet oder entsorgt werden.

Nach einer günstigen Weiterbildung kann der Ausgangsstoff Laub enthalten. Frisches Laub fällt im Herbst in großen Mengen an und kann nur schwer in sinnvoller Weise verwendet werden. Typischerweise enthält frisches Laub etwa 60% Trockensubstanz bezogen auf das Gewicht. Aber auch der Inhalt von haushaltsüblichen Biotonnen kann als Ausgangsstoff verwendet werden. Typischerweise ist der Trockensubstanzgehalt von derartigem Biomüll bei höchstens 25%.

Nach einem weiteren Aspekt der Erfindung wird ein Zement vorgeschlagen, der ein Feststoffprodukt und/oder Asche eines Feststoffprodukts als Zuschlag enthält.

Dabei ist das Feststoffprodukt nach dem erfindungsgemäßen Verfahren aus einer Mischung einer feuchten, heizwertarmen Masse und einem lignozellulosereichen und/oder zellulosereichen Ausgangsstoff hergestellt. Insbesondere kann das Feststoffprodukt bei der üblichen Temperaturbehandlung der Ausgangsstoffe bei der Zementherstellung verbrannt werden, wobei sich mineralstoffreiche Asche bildet, welche sich als Zuschlag dem Zement beimischt. Dies erlaubt eine unproblematische Entsorgung von unerwünschten Stoffen in Ausgangsmaterialien zur Bildung des kohlenstoffangereicherten Feststoffprodukts.

Nach einem weiteren Aspekt der Erfindung wird ein Betonprodukt vorgeschlagen mit einem Zement, welcher ein derartiges Feststoffprodukt und/oder Asche des Feststoffprodukts als Zuschlag enthält, das nach dem erfindungsgemäßen Verfahren hergestellt ist. Insbesondere kann das Feststoffprodukt verbrannt werden, wobei sich mineralstoffreiche Asche bildet, welche als Zuschlag dem Beton beigegeben werden kann. Dies erlaubt eine unproblematische Entsorgung von unerwünschten Stoffen in Ausgangsmaterialien zur Bildung des Feststoffprodukts.

Das Betonprodukt kann z.B. ein Bauteil aus Sichtbeton sein. Das Betonprodukt kann weiterhin z.B. ein Betonstein sein, der aus einem Kernbeton und einem Vorsatzbeton gebildet ist. Vorzugsweise ist der Zuschlag im Kernbeton vorgesehen.

Die Erfindung ist nachfolgend beispielhaft, ohne Beschränkung der Allgemeinheit, anhand von in den Zeichnungen dargestellten Ausführungsbeispielen näher erläutert.

Dabei zeigt:
- Fig. 1: eine beispielhafte Ausgestaltung einer vorteilhaften Reaktoranlage in schematischer Darstellung zur Durchführung des Verfahrens gemäß der Erfindung;
- Fig. 2: eine Tabelle mit Werten für Klärschlamm und Stroh; und
- Fig. 3: eine Tabelle für Mischungen von Klärschlamm und Stroh.

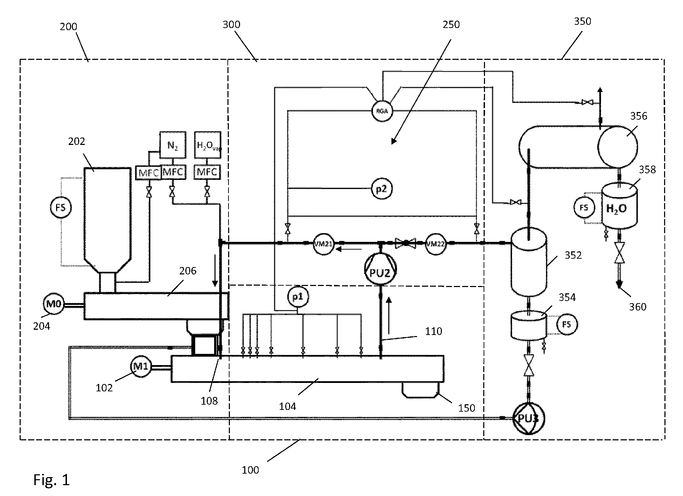

Zur Erläuterung der Erfindung zeigt Figur 1 eine Reaktoranlage, mit der das Verfahren zur Behandlung einer feuchten, heizwertarmen Masse besonders vorteilhaft ausgeführt werden kann. Eine solche Reaktoranlage ist aus der EP 2 390 301 A2 bekannt. Die Reaktoranlage weist einen Reaktor 100 auf, einen Zuführbereich 200, über den zu behandelnde Stoffe in den Reaktor 100 eingebracht werden, eine Gasanalytikbereich 300 mit einem Dampfkreislauf 250, sowie einen Kondensationsbereich 350.

Die feuchte, heizwertarme Masse wird mit einem Ausgangsstoff zu einer Mischung verarbeitet, die in der Reaktoranlage zu einem kohlestoffhaltigen Feststoffprodukt umgesetzt wird. Das Feststoffprodukt weist einen Heizwert auf, der über dem der heizwertarmen Masse liegt, auch wenn diese im getrockneten Zustand vorläge.

Über einen Einlass 202 werden die zu behandelnden Stoffmengen in eine Förderanlage 206 eingefüllt, die beispielsweise eine mittels eines Motors 204 angetriebene Förderschnecke aufweist. Dabei kann die Mischung im Einlass 202 gemischt werden, oder die Mischung kann außerhalb der Reaktoranlage zusammengestellt werden. Über die Förderanlage 206 gelangt die Mischung in den eigentlichen Reaktor 100 mit einem Reaktorgehäuse 104, in dem eine durch einen Motor 102 betriebene Förderschnecke die eingebrachte Mischung zum Ende des Reaktorgehäuses 104 fördert. An dessen Ende ist ein Auffangbehälter 150 angeordnet, in dem das im Reaktor 100 aus der Mischung gewonnene Feststoffprodukt aufgefangen wird. Das Verfahren kann kontinuierlich ablaufen, so dass kontinuierlich umzusetzendes Material zugeführt und Feststoffprodukt abgeführt werden kann.

Die Mischung wird auf eine Temperatur zwischen 100°C und 450°C erwärmt, z.B. auf 300°C, wobei aus der Mischung Wasserdampf entsteht, der als Reaktionsmedium dient. Eine externe Wasserzugabe ist nicht notwendig. Dabei entsteht ein moderater Überdruck, beispielsweise zwischen Atmosphärendruck und 2 bar. Vorteilhaft sind die Reaktionsbedingungen so gewählt, dass der Wasserdampf nicht oder praktisch nicht kondensiert, sondern während der Reaktion dampfförmig bleibt.

Am Ende des Reaktorgehäuses 104 wird gasförmiges Reaktionsmedium abgeführt und über eine Rückführleitung 110 teilweise oder ganz wieder zum Anfang des Reaktorgehäuses 104 zurückgeführt und über einen Einlass 108 ins Innere des Reaktorgehäuses 104 geleitet. Alternativ können entlang des Reaktorgehäuses 104 mehrere derartige Einlässe vorgesehen sein.

Neben Wasserdampf enthält das Reaktionsmedium auch organische Bestandteile aus der umzusetzenden Mischung. Diese können bei Rückführung des Reaktionsmediums im umzusetzenden Material adsorbiert werden und den Kohlenstoffgehalt des Feststoffprodukts erhöhen.

Dem Reaktionsmedium können auch weitere Stoffe von außen zugegeben werden, um die Reaktion und/oder die Eigenschaften des Feststoffprodukts zu beeinflussen. Beispielsweise kann ein Reaktionsstoff zugegeben werden, wie etwa ein Aerosol eines Säureanhydrids und/oder Metallsalzes. Um eine Kondensation des Wasserdampfes im Reaktor 100 zu vermeiden, ist der Wasserdampfpartialdruck des Reaktionsmediums kleiner als der Sättigungsdruck zu halten.

Aus der Rückführleitung 110 kann das Reaktionsmedium auch in den Kondensationsbereich 350 geleitet werden. Das Reaktionsmedium enthält außer Wasserdampf auch organische Bestandteile aus der im Reaktor 100 umzusetzenden Mischung, die im Kondensationsbereich 350 mittels eines Kondensators 352 auskondensiert und in einem Sammelbehälter 354 gesammelt werden können. Ebenso kann im Kondensationsbereich 350 überschüssiges Wasser in einem Kondensator 356 auskondensiert und in einem Sammelbehälter 358 gesammelt werden. Dieses kann entweder in die Umwelt abgelassen oder auch bei Bedarf über den Dampfkreislauf 250 in den Reaktor 100 zurückgeführt werden.

Entlang des Reaktorgehäuses 104 kann Reaktionsmedium entnommen und im Gasanalytikbereich 300 untersucht werden. Dies ist durch eine Anzahl von nicht näher bezeichneten Entnahmestellen entlang des Reaktorgehäuses 104 zu erkennen. Zu den gängigen Analysemethoden der Inhaltsstoffe des Reaktionsmediums zählen beispielsweise spektroskopische Methoden wie die Infrarotspektroskopie, aber auch andere qualitative und quantitative Messverfahren zur Analyse kohlenstoffhaltiger Substanzen, wie etwa die Flammenionisationsdetektion, Massenspektrometrie oder dergleichen.

Ferner können Druck und Temperatur innerhalb des Reaktorgehäuses 104 erfasst werden. Anhand der gemessenen Parameter kann die Verweildauer, d.h. die Fördergeschwindigkeit durch das Reaktorgehäuse 104, die Behandlungstemperatur und der Druck im Reaktorgehäuse 104 eingestellt und überwacht werden.

Dabei kann insbesondere die Förderbarkeit der Mischung eingestellt werden, indem mehr oder weniger der feuchten, heizwertarmen Masse in die Mischung zugegeben wird.

Die feuchte, heizwertarme Masse kann beispielsweise Klärschlamm sein, Trester, insbesondere Obsttrester, Biomüll oder auch Gärreste, die als Abfall bei der Biogasgewinnung zurückbleiben, oder auch Mischungen derartiger Massen. Typischerweise ist der Trockensubstanzgehalt in der Masse höchstens 30%, vorzugsweise höchstens 25%, jeweils bezogen auf das Gewicht der Masse.

Der Ausgangsstoff ist eine zellulosereiche und/oder lignozellulosereiche Masse mit organischen Verbindungen, insbesondere eine Biomasse, wie etwa Laub, Holz, Stroh, Grünschnitt, aber auch anderweitige Kohlenstoffquellen, wie etwa Reststoffe aus Getränke- oder Lebensmittelindustrie, die organische Hausmüllfraktion. Neben Biomasse sind auch fossile Kohlenstoffquellen als Ausgangsstoff denkbar. Selbstverständlich können auch Mischungen derartiger zellulosereicher und/oder lignozellulosereicher Massen eingesetzt werden. Ein typischer Trockensubstanzgehalt liegt dabei bei mehr als 30%, vorzugsweise bei mindestens 35%, besonders bevorzugt bei mindestens 40%, jeweils bezogen auf das Gewicht der Masse.

Bei einem Dauerversuch zur Behandlung von Mischungen aus Klärschlamm mit Gemüse- und Obstabfällen eines Großmarkts zeigte sich, dass sich die Mischungen ohne weitere Vorbehandlung der einzelnen Ausgangsmaterialien unproblematisch in ein kohlenstoffangereichertes Feststoffprodukt mit hohem Heizwert überführen ließen.

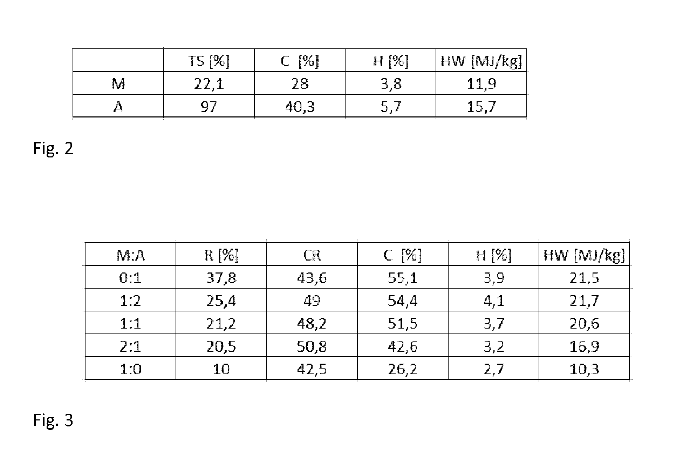

Figur 2 zeigt tabellarisch einige Materialparameter für Klärschlamm (M in der Tabelle) und Stroh (A in der Tabelle) nach einem Beispiel der Erfindung. Die Prozentangaben sind jeweils Gewichtsprozent.

Für Klärschlamm liegt in einem Beispiel im getrockneten Zustand ein typischer Heizwert (HW in der Tabelle) bei 11,9 MJ/kg bei einem Trockensubstanzgehalt (TS in der Tabelle) von 22,1 %, bezogen auf das Gewicht. Für feuchten, unbehandelten Klärschlamm liegt wegen des hohen Wassergehalts der Heizwert jedoch praktisch bei 0 MJ/kg. Der Kohlenstoffgehalt (C) in der Trockensubstanz liegt bei 28 %, während der Wasserstoffgehalt (H) bei 3,8 % liegt.

Stroh dagegen weist in einem Beispiel einen Trockensubstanzgehalt von 97 % auf und im getrockneten Zustand einen Heizwert von 15,7 MJ/kg. Der Kohlenstoffgehalt in der Trockensubstanz liegt bei 40,3 %, während der Wasserstoffgehalt bei 5,7 % liegt.

Ein aus einer Mischung aus feuchter und heizwertarmer Masse und einem zellulosereichen und/oder lignozellulosereichen Ausgangsstoff gewonnenes Feststoffprodukt ist brennbar und kann auf vielerlei Arten verwendet werden.

Figur 3 zeigt tabellarisch einige Materialparameter für ein Feststoffprodukt, das aus einer Mischung von Klärschlamm (M in der Tabelle) und Stroh (A in der Tabelle) nach einem Beispiel der Erfindung gebildet wurde. Dabei unterscheiden sich die Mischungsverhältnisse von Klärschlamm und Stroh von Zeile zu Zeile der Tabelle. Die Prozentangaben sind jeweils Gewichtsprozent.

Beispielsweise weist bei einem Einsatz von Stroh (erste Zeile der Tabelle), das Feststoffprodukt einen Heizwert von 21,5 MJ/kg auf, während bei einem Einsatz von Klärschlamm der Heizwert des umgesetzten Klärschlamms bei 10,3 MJ/kg, wobei der Klärschlamm zu Beginn einen Heizwert von nahe 0 MJ/kg aufwies. Dabei zeigt sich, dass selbst bei einem Mischungsverhältnis von 1:1 ein hoher Heizwert des Feststoffprodukts, d.h. eine hohe Verbrennungswärme des Feststoffprodukts, erreicht werden kann.

R in der Tabelle bezeichnet die Restmasse des Feststoffprodukts bezogen auf die Mischung zu Beginn der Reaktion, CR ist das so genannte Carbon Recovery, der Anteil an zurückgewonnenem Kohlenstoff (aufgeführt als Massenbrüche) und H der Wasserstoffgehalt in %, bezogen auf das Gewicht.

Sehr günstig ist die Verwendung eines solchen Feststoffprodukts als Zuschlag bei der Zementherstellung. Insbesondere kann das Feststoffprodukt bei den bei der Zementherstellung üblichen hohen Behandlungstemperaturen verbrannt werden und die aufgrund des Klärschlamms mineralienreiche Asche im Zement genutzt werden.

Ferner günstig ist die Verwendung in einem Betonprodukt, mit einem Zement, welcher das Feststoffprodukt und/oder Asche davon als Zuschlag enthält. Dadurch sind etwaige, aus dem Klärschlamm herrührende Schadstoffe oder für die Umwelt belastende Stoffe im Betonprodukt fest gebunden und dauerhaft entsorgt.

## Patentansprüche

1. Verfahren zur Behandlung einer feuchten, heizwertarmen Masse, wobei folgende Schritte ausgeführt werden
(a) Bilden einer Mischung aus der Masse und einem Ausgangsstoff, wobei der Ausgangsstoff einen oder mehrere zellulosereiche und/oder lignozellulosereiche Bestandteile enthält;
(b) Beaufschlagen der Mischung mit einem dampfförmigen Reaktionsmedium in einem Reaktor (100), wobei das Reaktionsmedium Wasser in Form von Wasserdampf enthält;
(c) Umwandeln der Mischung im Reaktor (100) mit dem Reaktionsmedium unter Sauerstoffabreicherung bei einem Druck im Bereich von Atmosphärendruck bis höchstens 5 bar und einer Behandlungstemperatur im Bereich zwischen 100°C und 450°C in ein kohlenstoffangereichertes Feststoffprodukt.

2. Verfahren nach Anspruch 1, wobei der Wasserdampf im Reaktionsmedium im Wesentlichen oder vollständig aus der Mischung stammt.

3. Verfahren nach Anspruch 1 oder 2, wobei die Behandlungstemperatur so eingestellt wird, dass die Behandlungstemperatur unterhalb einer Grenztemperatur bleibt, wobei oberhalb der Grenztemperatur eine merklich erhöhte Bildung von CO₂ erfolgt.

4. Verfahren nach einem der vorhergehenden Ansprüche, wobei der Gehalt an feuchter, heizwertarmer Masse in der Mischung abhängig von einer gewünschten Förderbarkeit der Mischung durch den Reaktor (100) eingestellt wird.

5. Verfahren nach einem der vorhergehenden Ansprüche, wobei der Gehalt und/oder die Art an Ausgangsstoff in der Mischung abhängig von einem gewünschten Heizwert des Feststoffprodukts eingestellt wird.

6. Verfahren nach einem der vorhergehenden Ansprüche, wobei als Reaktionsmedium ein Wasserdampfgemisch verwendet wird, wobei das Wasserdampfgemisch ein Wasserdampf/Trägergasgemisch und/oder ein Wasserdampf/Reaktionsstoffgemisch ist, wobei der Reaktionsstoff insbesondere eines oder mehrere der Bestandteile enthält: eine oder mehrere organische Komponenten wie Methan und/oder der Gruppe der höheren Alkane, Alkene, Aromate, deren funktionalisierte Derivate, und/oder Kohlendioxid, und/oder Kohlenmonoxid, und/oder ein oder mehrere Aerosole, insbesondere enthaltend Säureanhydride und/oder insbesondere enthaltend Säuren, und/oder Metallsalz, und/oder Verbrennungsabgas.

7. Verfahren nach einem der vorhergehenden Ansprüche, wobei der Druck im Reaktor (100) und/oder die Behandlungstemperatur und/oder eine Verweildauer in dem Reaktor (100) eingestellt werden, um gezielt ein Feststoffprodukt mit gewünschten Eigenschaften zu erzeugen.

8. Verfahren nach Anspruch 7, wobei der Druck im Reaktor (100) und/oder die Behandlungstemperatur und/oder die Verweildauer in dem Reaktor (100) während der Umsetzung der Mischung zum Feststoffprodukt angepasst werden.

9. Verfahren nach einem der vorhergehenden Ansprüche, wobei die Mischung kontinuierlich durch den Reaktor (100) bewegt wird.

10. Verfahren nach einem der vorhergehenden Ansprüche, wobei überschüssiges Reaktionsmedium aus dem Reaktor (100) ausgekoppelt und in den Reaktor teilweise oder ganz zurückgeführt wird.

11. Verfahren nach einem der vorhergehenden Ansprüche, wobei der Ausgangsstoff Laub enthält.

12. Zement, der ein Feststoffprodukt und/oder Asche eines Feststoffprodukts als Zuschlag enthält, das nach einem Verfahren nach einem der vorhergehenden Ansprüche hergestellt ist.

13. Betonprodukt, mit einem Zement, der ein Feststoffprodukt und/oder Asche des Feststoffprodukts als Zuschlag enthält, das nach einem Verfahren nach einem der Ansprüche 1 bis 11 hergestellt ist.
